# EUROPEAN PATENT APPLICATION

(11) **EP 2 299 132 A1**
(43) Date of publication of application: **23.03.2011**
(21) Application number: 09754643.6
(22) Date of filing: 25.05.2009
(51) Int. Cl.: F16C 33/64, C10M 125/10, C10M 129/26, C10M 139/00, C21D 9/40, F16C 19/06, F16C 33/62, F16C 33/66, C10N 10/12, C10N 30/00, C10N 40/02, C10N 50/10

(54) **GREASE-SEALED BEARING**

(30) Priority: 28.05.2008 JP 2008139516
(71) Applicant: NTN Corporation, Osaka-shi, Osaka 550-0003 (JP)
(72) Inventor: MURAMATSU Makoto, Iwata-shi Shizuoka 438-0037 (JP); FUKAMA Shohei, Iwata-shi Shizuoka 438-0037 (JP)
(74) Representative: Grünecker, Kinkeldey, Stockmair & Schwanhäusser Anwaltssozietät
(86) International application number: PCT/JP2009/059512
(87) International publication number: WO 2009/145135

(57) **Abstract**

An object is to prevent premature peeling on the raceways due to hydrogen embrittlement using an inexpensive means. The inner and outer races 2 and 3 are made of high-carbon chrome bearing steel SUJ2, and is subjected to high-temperature tempering of 260°C or higher, and the grease A contains a molybdate and an organic acid salt. With this arrangement, it is possible to prevent premature peeling on raceways 2a and 3a due to hydrogen embrittlement with such simple means as to slightly increase the tempering temperature and specify the composition of the grease A.

## Description

### TECHNICAL FIELD

This invention relates to a grease-sealed rolling bearing in which grease is sealed.

### BACKGROUND ART

In a grease-sealed rolling bearing supporting a rotary portion of an electrical vehicle engine accessory such as an alternator or an electromagnetic clutch, peculiar peeling may prematurely develop on the raceways of bearing ring that accompanies whitening of the structure. Unlike ordinary peeling due to metal fatigue, this peeling phenomenon occurs at a relatively shallow portion of the surface layer, and occurs more frequently on the stationary bearing ring, of which the load acting position remains unchanged.

For the cause of this peculiar peeling phenomenon on the surface layer, it was discovered (e.g. in Non-patent document 1) that when hydrogen analysis was conducted for the bearing rings after a reproduction test in which acceleration and deceleration are repeated, the hydrogen content on the stationary bearing ring was greater. Thus, hydrogen embrittlement is presumably the cause of the above-mentioned peculiar peeling phenomenon. In particular, hydrogen embrittlement presumably occurs when the grease sealed in the bearing decomposes due to newly generated surfaces generated on the raceways when they slip against the rolling elements, which act as catalysts, and hydrogen produced due to decomposition of the grease infiltrate into steel. Also, in the case of a grease-sealed bearing used for electrical vehicle engine accessories, grease decomposition is presumably also accelerated by weak current that flows through the bearing.

In order to prevent premature peeling of raceways due to hydrogen embrittlement when grease decomposes, it is proposed to add a molybdate and an organic acid salt as additives to the grease, thereby forming iron oxide and a molybdenum compound film on raceways by reacting and decomposing the molybdate on newly generated surfaces, and thus reducing production of hydrogen due to decomposition of the grease (see e.g. Patent document 1).

In Patent document 2, it is also proposed to form at least the stationary bearing ring from steel containing 1.5 to 6% of Cr, thereby inactivating the surface with an oxide film of Cr formed on the raceway, and suppressing decomposition of the grease. In this arrangement, it is also possible to prevent infiltration of hydrogen into the steel even if the grease decomposes and hydrogen is produced.

Further, in rolling bearings used in electrical vehicle engine accessories, hydrogen may be produced from water that infiltrate from outside such as muddy water and rainwater, or from water produced due to dew formation resulting from change in ambient temperature and from the temperature difference while the bearings are operating and not operating, such hydrogen may infiltrate into steel. Thus, it is also proposed to form an oxide film of the iron oxide chrome family on each raceway to prevent infiltration of hydrogen into steel (see e.g. Patent document 3). In Patent document 3, an oxide film of the iron oxide chrome family is formed on each raceway by reheating each tempered member in the air.

### PRIOR ART DOCUMENTS

### NON-PATENT DOCUMENTS

Non-patent document 1: "Reproducing experiment of embrittlement peeling when the outer race is rotated" by Tamada and Tanaka, Japan Tripology Academic Society's tripology meeting preliminary report, October 1994, page 749 - 752

### PATENT DOCUMENTS

Patent document 1: JP Patent Publication 2005-112902A
Patent document 2: JP Patent Publication 5-26244A
Patent document 3: JP Patent Publication 2000-11235A

### SUMMARY OF THE INVENTION

### OBJECT OF THE INVENTION

In the grease-sealed bearing disclosed in Patent document 2, since the bearing rings are made of a special material containing a large amount of Cr, its manufacturing cost is high. In the bearing disclosed in Patent document 3 too, since the additional step of reheating is necessary in order to form an oxide film, its manufacturing cost is high.

An object of the present invention is to prevent premature peeling on the raceways due to hydrogen embrittlement using an inexpensive means.

### MEANS TO ACHIEVE THE OBJECT

In order to achieve this object, the present invention provides a grease-sealed rolling bearing comprising an inner race having a raceway, an outer race having a raceway, and rolling elements disposed between the raceways of the inner and outer races, wherein grease is sealed in the bearing, wherein at least one of the inner and outer races is made of high-carbon chrome bearing steel SUJ2, and is subjected to high-temperature tempering of 260°C or higher, and wherein the grease contains a molybdate and an organic acid salt.

That is, with the arrangement in which at least one of the inner and outer races is made of high-carbon chrome bearing steel SUJ2, and is subjected to high-temperature tempering of 260°C or higher, and the grease contains a molybdate and an organic acid salt, it is possible to prevent premature peeling on the raceway by setting the tempering temperature slightly higher. It is not clearly known why embrittlement peeling due to hydrogen embrittlement is suppressed by carrying out high-temperature tempering of 260°C or higher. But this is presumably because by high-temperature tempering, the residual austenite content in the metal structure decreases, so that due to a reduction in the content of austenite, which is of the body-centered cubic structure and has large gaps between lattices, hydrogen is less likely to infiltrate into steel. By adding a molybdate and an organic acid salt to the grease, iron oxide and a molybdenum compound film form on the raceway, which reduces the production of hydrogen due to decomposition of the grease.

Preferably, the stationary one of the inner and outer races is made of high-carbon chrome bearing steel SUJ2, and is subjected to high-temperature tempering of 260°C or higher.

This grease-sealed rolling bearing may be a ball bearing.

This grease-sealed rolling bearing can be advantageously used to support a rotary portion of an electrical vehicle engine accessory.

### ADVANTAGES OF THE INVENTION

With the grease-sealed bearing according to the present invention, since at least one of the inner and outer races is made of high-carbon chrome bearing steel SUJ2, and is subjected to high-temperature tempering of 260°C or higher, and the grease contains a molybdate and an organic acid salt, it is possible to prevent premature peeling on the raceway due to hydrogen embrittlement using an inexpensive means.

### BRIEF DESCRIPTION OF THE DRAWINGS

Fig. 1 is a vertical sectional view of a grease-sealed bearing embodying the present invention.
Fig. 2 is a vertical sectional view of an alternator in which grease-sealed bearings shown in Fig. 1 are used.
Fig. 3 is a vertical sectional view of a bearing tester used in an embrittlement peeling test of examples.
Fig. 4 is a graph showing the rotation cycle of a rotary shaft of the bearing tester of Fig. 3 during the embrittlement peeling test.

### BEST MODE FOR EMBODYING THE INVENTION

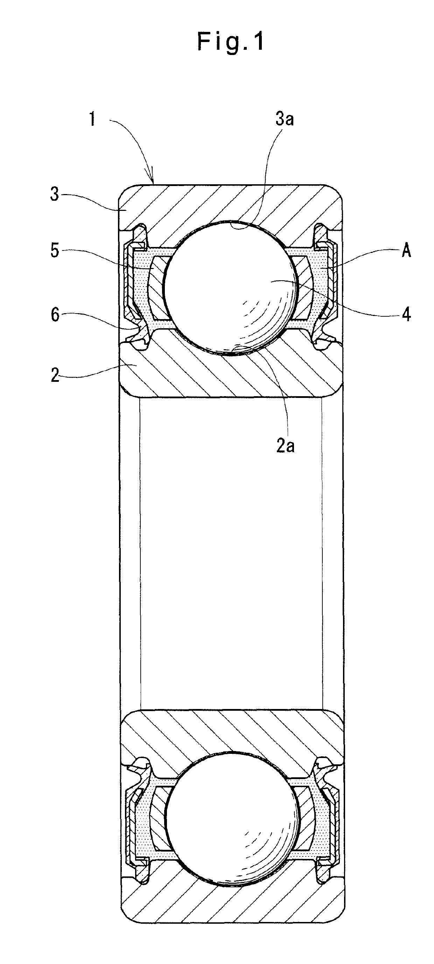

Now the embodiment of the invention is described with reference to the drawings. This grease-sealed bearing 1 shown in Fig. 1 is a deep-groove ball bearing comprises an inner race 2 having a raceway 2a, an outer race 3 having a raceway 3a, a plurality of balls 4 as rolling elements disposed between the raceways 2a and 3a, and a retainer 5 retaining the balls 4 in position. Grease A is sealed in the interior of the bearing sealed by seal members 6.

The inner race 2, the outer race 3 and the balls 4 are made of high-carbon chrome bearing steel SUJ2 and are subjected to hardening and tempering. Any of these elements are hardened at 850°C. The bearing rings, i.e. inner and outer races 2 and 3 are subjected to high-temperature tempering of 260°C. The balls 4 are subjected to normal tempering at a normal tempering temperature of 180°C.

The grease A comprises grease of the urea family containing synthetic hydrocarbon oil as base oil, and a molybdate and an organic acid salt as additives. In the embodiment, the molybdate is present in the amount of 0.01 to 5% by mass of the entire grease, while the organic acid salt is present in the amount of 5 to 70% by mass of the molybdate.

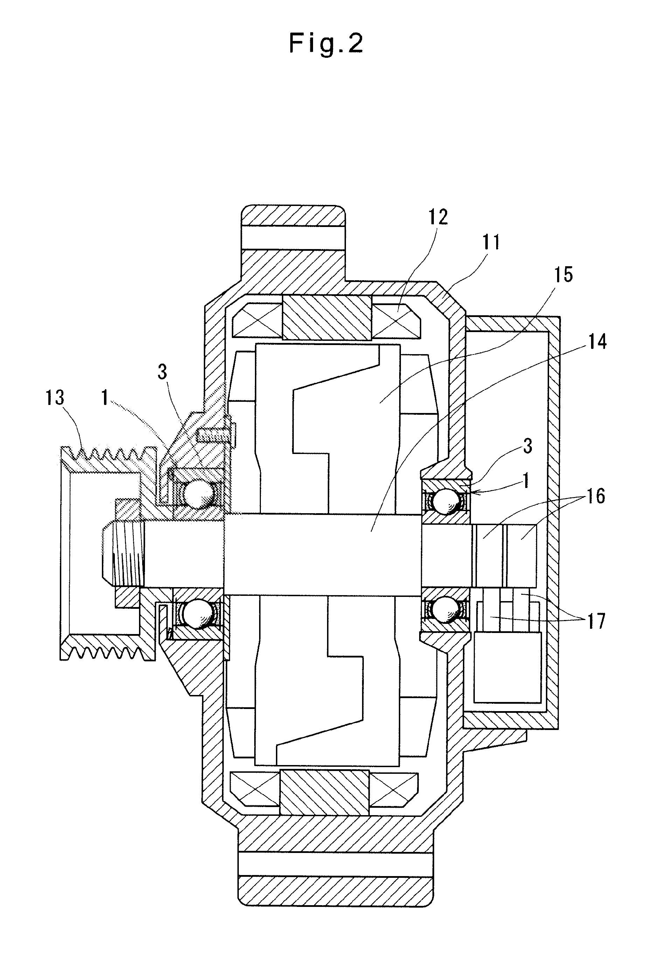

Fig. 2 shows an alternator as an electrical automotive engine accessory in which grease-sealed bearings 1 of the above-described type are used. This alternator comprises a housing 11, a stator 12 fixed to the housing 11, and a rotor 15 having a rotor shaft 14 carrying on its front end a pulley 13 through which torque of the engine is transmitted. Generated current flows through slip rings 16 mounted to the rear end of the rotor shaft 14 and is taken out from a brush 17. The grease-sealed bearings 1 support the front and rear ends of the rotor shaft 14, respectively. The outer race 3 of each bearing 1 is a stationary bearing ring fixed to the housing 11.

### EXAMPLES

As an example of the invention, a grease-sealed bearing in the form of a deep groove ball bearing was prepared which comprises the above-described inner race, outer race and balls, which are made of high-carbon chrome bearing steel SUJ2 and are hardened at 850°C, of which the inner race and the outer race are subjected to high-temperature tempering of 260°C, and in which grease of the urea family is sealed which comprises synthetic hydrocarbon oil as base oil, and further contains a molybdate and an organic acid salt as additives. As a comparative example, a deep groove ball bearing was prepared which comprises the above-described inner race, outer race and balls, which are made of high-carbon chrome bearing steel SUJ2 and are hardened at 850°C, as with the example of the invention, of which the inner race and the outer race are subjected to normal tempering at a normal temperature of 180°C, and in which ordinary urea-family grease containing synthetic hydrocarbon oil as base oil is sealed. The deep groove ball bearings of the example of the invention and the comparative example both measured 47 mm in outer diameter, 17 mm in inner diameter and 14 mm in width.

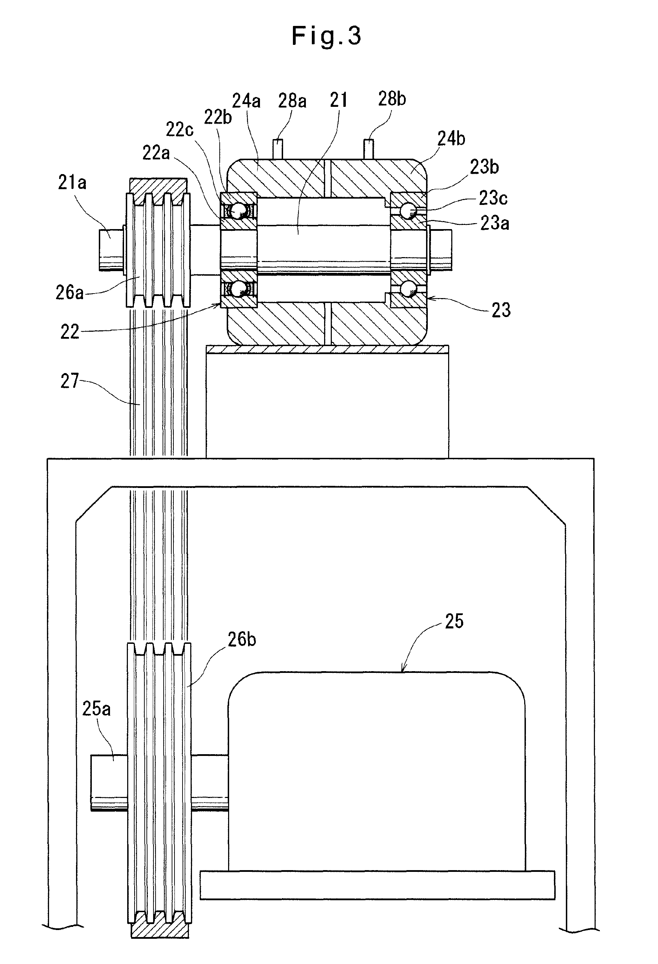

Using a bearing tester shown in Fig. 3, test bearings 22, which are the deep groove ball bearings of the example of the invention and the comparative example, were subjected to an embrittlement peeling test. This bearing tester includes separate housings 24a and 24b insulated from each other, and a rotary shaft 21 supported by the housings 24a and 24b through the test bearing 22 and a dummy bearing 23, respectively. Pulleys 26a and 26b are mounted to an extension 21a extending from the portion of the rotary shaft 21 where the test bearing 22 is mounted, and to an output shaft 25a of a motor 25 which extends parallel to the rotary shaft 21, respectively. An endless belt 27 is trained around the pulleys 26a and 26b and the rotary shaft 21 is driven by the motor through the belt. Also, the tension of the endless belt 27 is applied to the test bearing 22 through the extension 21a of the rotary shaft 21 as radial loads.

The rotary shaft 21 and the housings 24a and 24b are made of a conductive material, and the housings 24a and 24b have contact terminals 28a and 28b adapted to be connected to the plus and minus terminals of a power source (not shown), respectively. By connecting the contact terminals 28a and 28b to a power source, electric current flows through the housing 24a, the outer race 22b, balls 22c and inner race 22a of the test bearing 22, the rotary shaft 21, and the inner race 23a, balls 23c and outer race 23c of the dummy bearing 23, to the housing 24b. Thus hydrogen is forcibly generated from the grease sealed in the test bearing 22 due to electrolysis of the grease, so that it is possible to reproduce peeling due to hydrogen embrittlement in a short period of time.

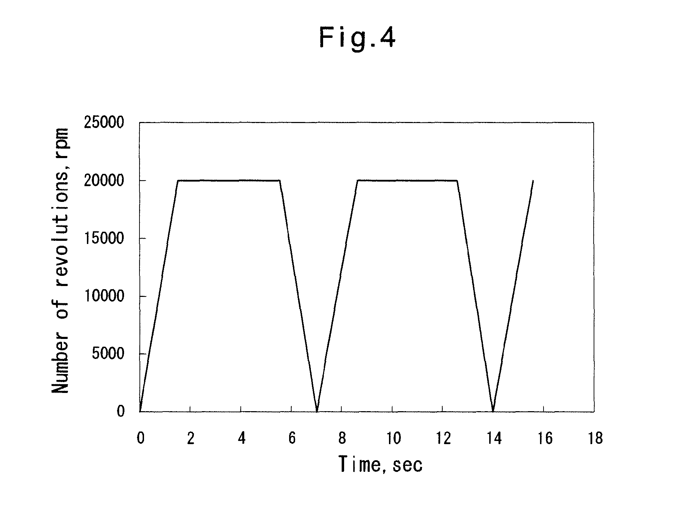

Fig. 4 shows the acceleration/deceleration cycle of the rotary shaft 21 in the above-mentioned test device during the embrittlement peeling test. Other test conditions are shown below. The bearing life span of the bearing due to embrittlement peeling was determined based on change in driving torque. Three sample bearings were prepared for each of the example of the invention and the comparative example.
Load on pulley: 1617 N
Current applied: 1.0 A

**Table 1**

| | Bearing life span (hours) | | | Average bearing life Span (hours) |
|---|---|---|---|---|
| Example of the Invention | 126 | 165 | 141 | 144 |
| Comparative Example | 42 | 66 | 92 | 67 |

Table 1 shows the results of the embrittlement peeling test. Compared to the average bearing life span of 67 hours for the comparative example, the average bearing life span of any sample of the example of the invention exceeded 100 hours and was about twice that of any sample of the comparative example. When the test bearings of the example of the invention and the comparative example were visually observed, it was confirmed that embrittlement peeling developed on the raceway of any of the outer races, or the stationary bearing rings. The test results confirmed that with the grease-sealed bearings of the example of the invention, in which at least one of the inner and outer races is made of high-carbon chrome bearing steel SUJ2, and is subjected to high-temperature tempering of 260°C or higher, and the grease contains a molybdate and an organic acid salt, it is possible to prevent significantly prolong the bearing life span due to embrittlement peeling.

In this embodiment, the grease-sealed bearing is a deep groove ball bearing, and both the inner and outer races are made of high-carbon chrome bearing steel SUJ2, and are subjected to high-temperature tempering of 260°C or higher. But only the stationary bearing ring may be subjected to high-temperature tempering of 260°C or higher. The grease-sealed bearing according to the present invention is not limited to a deep groove ball bearing, but may be an angular ball bearing, a roller bearing, a tapered roller bearing, etc.

### DESCRIPTION OF THE NUMERALS

- A.: Grease
- 1.: Grease-sealed bearing
- 2.: Inner race
- 3.: Outer race
- 2a, 3a.: Raceway
- 4.: Ball
- 5.: Retainer
- 6.: Seal member
- 11.: Housing
- 12.: Stator
- 13.: Pulley
- 14.: Rotor shaft
- 15.: Rotor
- 16.: Slip ring
- 17.: Brush
- 21.: Rotary shaft
- 21a.: Extension
- 22.: Test bearing
- 23.: Dummy bearing
- 22a, 23a.: Inner race
- 22b, 23b.: Outer race
- 22c, 23c.: Ball
- 24a, 24b.: Housing
- 25.: Motor
- 25a.: Output shafto
- 26a, 26b.: Pulley
- 27.: Endless belt
- 28a, 28b.: Contact terminal

## Claims

1. A grease-sealed rolling bearing comprising an inner race having a raceway, an outer race having a raceway, and rolling elements disposed between the raceways of the inner and outer races, wherein grease is sealed in the bearing, **characterized in that** at least one of the inner and outer races is made of high-carbon chrome bearing steel SUJ2, and is subjected to high-temperature tempering of 260°C or higher, and that said grease contains a molybdate and an organic acid salt.

2. The grease-sealed rolling bearing of claim 1 wherein a stationary one of the inner and outer races is made of high-carbon chrome bearing steel SUJ2, and is subjected to high-temperature tempering of 260°C or higher.

3. The grease-sealed rolling bearing of claim 1 or 2 which is a ball bearing.

4. The grease-sealed rolling bearing of any of claims 1 to 3 which supports a rotary portion of an electrical vehicle engine accessory.
